# EUROPEAN PATENT APPLICATION

(11) **EP 1 790 968 A1**
(43) Date of publication of application: **30.05.2007**
(21) Application number: 06122474.7
(22) Date of filing: 17.10.2006
(51) Int. Cl.: G01N 19/02, B65G 45/02

(54) **Lubrication regulation system**

(30) Priority: 25.11.2005 IT MI20052261
(71) Applicant: Sunbird Investments Limited, St. Helier, Jersey, Channel Islands JE4 9ZH (GB)
(72) Inventor: Divisi, Walter, Egham, Surrey TW20 0HJ (GB)
(74) Representative: Pesce, Michele

(57) **Abstract**

The conveyor (1) comprises a conveyor belt (2) with which a lubricant dispensing device (4) is associated. It also comprises a device (7) for measuring a quantity proportional to the friction coefficient between the conveyor belt (2) and the bottles and connected to control means (8) for controlling said lubricant dispensing device (4) in such a manner as to regulate the lubricant amount in order to maintain the measured quantity within a predetermined range. The lubrication regulating process for a conveyor belt (2) of a conveyor (1) for bottles or containers in general consists of measuring a quantity indicative of the friction coefficient between the conveyor belt (2) and bottles and controlling the lubricant feed onto the conveyor belt (2) such as to maintain this quantity within a predetermined range.

## Description

The present invention relates to a conveyor and to a lubrication regulating process for a conveyor belt of a conveyor for bottles or containers in general.

When conveying bottles (or containers presenting similar characteristics) it is known to usually use conveyors comprising conveyor belts on which the bottles are deposited.

The conveyor belts are provided at their end with collection units which channel the bottles towards subsequent treatments (for example to feed them to a labelling machine).

In particular, the collection units comprise a pair of crosspieces against which the bottles collide and by which they are guided.

The crosspieces define a passage port enabling only one bottle to pass; hence in practice the bottles arrive continuously and accumulate at the crosspieces, whereas only one bottle at a time can pass through the port and be channelled to the next operation.

Consequently, as the bottles remain accumulated at the crosspieces and as the conveyor belt continues to translate continuously without stopping, the bottles have necessarily to slide on the conveyor belt.

To facilitate sliding and to prevent the bottles from falling over because of friction, it is known to lubricate the conveyor belt upper surface (that on which the bottles are placed).

The conveyor belt upper surface is currently lubricated by feeding a film of lubricating liquid, typically lubricating oil, onto the conveyor belt to achieve minimal lubrication of the conveyor belt.

Specifically, upstream of each conveyor belt, a lubricant dispenser is disposed which is fed with a predetermined lubricant amount (usually a predetermined lubricant amount per unit of time or a predetermined lubricant amount per unit of length travelled through by the conveyor belt); the dispenser then uniformly distributes lubricant over the conveyor belt.

However, traditional conveyors present the considerable drawback of not being able to automatically regulate the lubricant amount dispensed onto the conveyor belt to adapt to any changes in friction conditions between the conveyor belt and the bottles.

This is of considerable importance when considering that the friction coefficient is a function both of the contacting materials and of the type and quality of lubricant, but is also considerably influenced by other factors which can change greatly with time, such as the temperature and humidity of the environment in which the conveyor is disposed.

To this must be added the fact that the conveyor belt must always be lubricated correctly because if lubrication is excessive (with respect to the instantaneous friction coefficient between the conveyor belt and bottles), the bottles would slide on the conveyor belt and be unable to overcome even small inclinations, whereas if lubrication is insufficient (with respect to the instantaneous friction coefficient between the conveyor belt and bottles), the bottles (on being braked and accumulated at the crosspieces) would overturn.

The technical aim of the present invention is therefore to provide a conveyor and a process for regulating the lubrication of a conveyor belt of a conveyor for bottles or containers in general which enable the stated drawbacks of the known art to be eliminated.

Within the framework of this technical aim an object of the invention is to provide a conveyor and a process which enable the lubrication of the conveyor belt to be automatically regulated by adapting it to the continuous changes in the friction conditions between the conveyor belt and the bottles.

The technical aim, together with this and other objects, are attained according to the present invention by a conveyor and a process for regulating the lubrication of a conveyor belt of a conveyor for bottles or containers in general, in accordance with the accompanying claims.

Further characteristics and advantages of the invention will be more apparent from the ensuing description of a preferred but non-exclusive embodiment of the conveyor and the process according to the invention, illustrated by way of non-limiting example in the accompanying drawings, in which:
Figure 1 is a schematic view of a conveyor according to the invention seen from above;

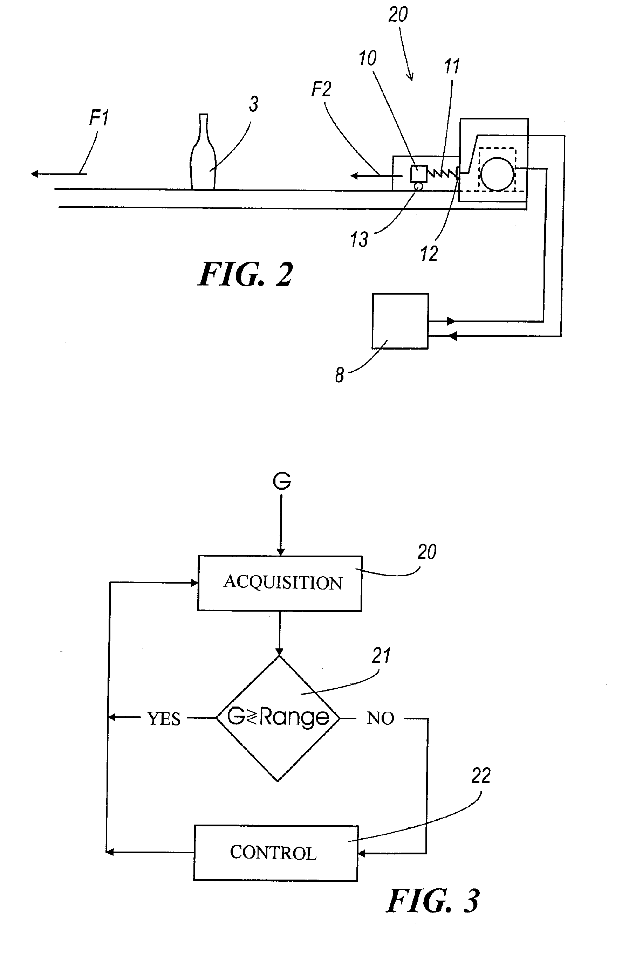

Figure 2 is a device for measuring the friction coefficient of the device of Figure 1; and
Figure 3 is a block diagram of the software according to the present invention.

With reference to said figures, these show a conveyor indicated overall by the reference numeral 1.

The conveyor 1 comprises a conveyor belt 2 for supporting the bottles or containers 3, and a lubricant dispensing device 4 associated with the conveyor belt 2; the lubricant preferably consists of lubricating oil and enables minimal lubrication of the conveyor belt to be achieved.

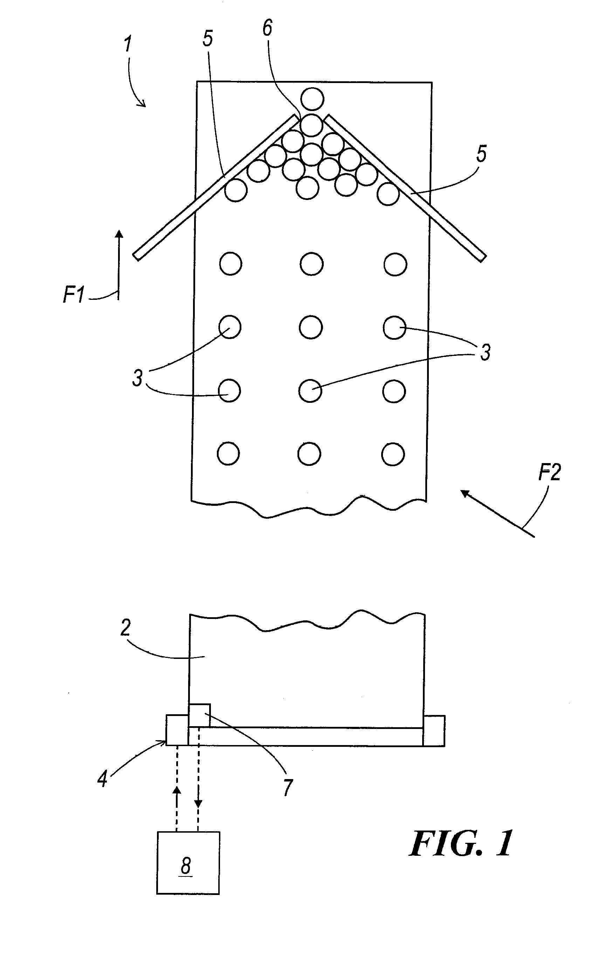

As shown in Figure 1, the conveyor is also provided with a collection unit for the bottles 3 which comprises two crosspieces 5 disposed above the conveyor belt 2 (but spaced therefrom) and inclined such that their closest portions mutually converge but are spaced apart to define a space 6 through which a single bottle can pass at a time.

The conveyor 1 also comprises a device 7 for measuring a quantity proportional to the friction coefficient between the conveyor belt and the bottles and connected to control means 8 (typically a PLC) to control the lubricant dispensing device 4, in such a manner as to regulate the lubricant amount dispensed in order to maintain the friction coefficient within a predetermined range.

Specifically, the friction coefficient measuring device 7 comprises a slider 10 connected via elastic means 11 (such as a spiral spring) to a sensor 12 able to measure the force acting on it and provided with a contact portion 13 slidably associated with the conveyor belt 2.

The operation of the conveyor according to the invention is apparent from that described and illustrated, and is essentially the following.

During operation, the conveyor belt moves as indicated by the arrow F1.

The slider 10 (which supports the portion 13 slidably associated with the conveyor belt 2) is urged as indicated by the arrow F2 and consequently pulls the spring 11, which deforms by lengthening; this latter exerts a force on the sensor 12 indicative of the force F2 and hence proportional to the friction between the conveyor belt 2 and the contact portion 13 controlled by the lubricant.

This friction is mainly dependent on the lubrication conditions (minimal lubrication) and is hence indicative of the friction coefficient between the conveyor belt 2 and the bottles 3 controlled by the lubricant (as this later is also mainly dependent on the lubrication conditions).

In addition, as the lubrication characteristics vary with time (for example in relation to the environmental conditions such as temperature or humidity), the measured quantity also varies with time (in relation to the change in friction coefficient).

The quantity measured by the sensor 12 is communicated to the PLC 8 and is compared with a reference range for this quantity, to evaluate whether it lies or does not lie within this range.

In practice, by maintaining the measured quantity within the predetermined range, the friction coefficient between the conveyor belt 2 and bottles 3 is maintained within a range of values for which correct lubrication is ensured.

If the measured quantity is outside the reference range (or even if, within this range, the values of its first or second derivative indicate an early departure therefrom), the PLC 8 causes the dispensing device 4 to increase or decrease the dispensed lubricant flow rate, to return the measured quantity to within the preset range (or to maintain the measured quantity within the preset range, by making it approach the mean value of the preset range).

The present invention also relates to a process for regulating the lubrication of a conveyor belt of a conveyor for bottles or containers in general.

The process consists of measuring a quantity indicative of the friction coefficient between the conveyor belt 2 and bottles 3 and controlling the lubricant feed onto the conveyor belt 2 such as to maintain this quantity within a predetermined range.

The present invention also relates to software for regulating the lubrication of a conveyor belt 2 of a conveyor 1 for bottles 3 or containers in general.

The software comprises acquisition means 20 for a quantity G indicative of the friction coefficient between the conveyor belt 2 and bottles 3, and processing means 21 for comparing the acquired quantity G with a preset range for this quantity.

The processing means are arranged to evaluate whether the quantity G is within or not within the preset range, then continuing to acquire the quantity G if within the range, or activating control means 22 if not within the range.

The software control means 22 act on the lubricant dispensing device 4 to regulate the lubricant amount delivered and to maintain the acquired quantity G within the preset range.

It has been found in practice that the conveyor and the lubrication regulating process for a conveyor belt of a conveyor for bottles or containers in general according to the invention are particularly advantageous because they enable the lubricant amount dispensed onto the conveyor belt to be automatically controlled and regulated on the basis of the instantaneous operating conditions.

The conveyor and the lubrication regulating process for a conveyor belt of a conveyor for bottles or containers in general conceived in this manner are susceptible to numerous modifications and variants, all falling within the scope of the inventive concept; moreover all details can be replaced by technically equivalent elements.

In practice the materials used, and the dimensions, can be chosen at will according to requirements and to the state of the art.

## Claims

1. A conveyor (1) comprising a conveyor belt (2) with which a lubricant dispensing device (4) is associated, **characterised by** comprising a device (7) for measuring a quantity proportional to the friction coefficient between said conveyor belt (2) and said bottles and connected to control means (8) for controlling said lubricant dispensing device (4) in such a manner as to regulate the lubricant amount in order to maintain the measured quantity within a predetermined range.

2. A conveyor (1) as claimed in claim 1, **characterised in that** said measuring device (7) comprises a slider (10) connected via elastic means (11) to a sensor (12) able to measure the force acting on it and provided with a contact portion (13) slidably associated with said conveyor belt (2), such that during operation said slider (10) is dragged by said conveyor belt (2) and is retained by said elastic means (11) which, by exerting a force on the sensor (12), enable a signal to be measured indicative of the friction coefficient between the conveyor belt (2) and the contact portion (13), which is proportional to the friction coefficient between the conveyor belt (2) and the bottles.

3. A lubrication regulating process for a conveyor belt (2) of a conveyor (1) for bottles or containers in general, **characterised by** consisting of measuring a quantity indicative of the friction coefficient between the conveyor belt (2) and bottles and controlling the lubricant feed onto the conveyor belt (2) such as to maintain this quantity within a predetermined range.

4. Software for regulating the lubrication of a conveyor belt (2) of a conveyor (1) for bottles or containers in general, **characterised by** comprising acquisition means (20) for a quantity indicative of the friction coefficient between the conveyor belt (2) and bottles, and processing means (21) for comparing the acquired quantity with a preset range for this quantity, said software also comprising control means (22) for a lubricant dispensing device (4) which regulate the lubricant amount dispensed and maintain said acquired value within the preset range.
